Europäisches Patentamt

(19) European Patent Office

Office européen des brevets

(11) Numéro de publication : **0 436 432 A1**

## (12) DEMANDE DE BREVET EUROPEEN

(21) Numéro de dépôt : **90403745.4**

(22) Date de dépôt : **21.12.90**

(51) Int. Cl.⁵ : **G06E 3/00, G06E 1/02**

(30) Priorité : **27.12.89 FR 8917271**
**03.10.90 FR 9012206**

(43) Date de publication de la demande :
**10.07.91 Bulletin 91/28**

(84) Etats contractants désignés :
**AT BE CH DE DK ES FR GB GR IT LI LU NL SE**

(71) Demandeur : **SODENA Société à**
**Responsabilité Limitée**
**7, rue de la Paix**
**F-59250 Halluin (FR)**

(72) Inventeur : **Huignard, Jean Christian Philippe**
**5, rue du Général Lacharrière**
**Créteil (Val de Marne) (FR)**
Inventeur : **Sauvin, Patrick**
**23, rue des Rossignols**
**Ris Orangis (Essonne) (FR)**
Inventeur : **Bazzi, Ouzana**
**Résidence les Tilleuls, Appartement 33**
**Valenciennes (Nord) (FR)**
Inventeur : **Torguet, Roger**
**42, rue Heinri Barbusse**
**Saint Saulve (Nord) (FR)**

(74) Mandataire : **Rataboul, Michel Charles**
**CMR INTERNATIONAL 69, rue de Richelieu**
**F-75002 Paris (FR)**

(54) **Procédé pour la détection, la reconnaissance et l'exploitation de signaux mêlés à d'autres signaux de codage ou parasites et dispositif pour la mise en oeuvre de ce procédé.**

(57)    Le procédé est destiné à la détection, la reconnaissance et l'exploitation de séquences significatives de signaux modulés sur une fréquence porteuse, mêlées à d'autres signaux, du type selon lequel on génère une séquence test correspondant à la séquence à reconnaître toutes deux de profils coordonnés, puis que l'on transforme les signaux électriques de ces séquences en signaux ultrasonores, puis que l'on conduit la séquence test (X) et une séquence reçue (W) après transformation en signaux ultrasonores à un unique corps cristallin (50) du genre cellule de Bragg, pour que ces deux séquences (X et W) parcourent parallèlement ledit corps cristallin unique (50).

Selon l'invention, on dirige simultanément un faisceau laser (Y) dans l'unique et même corps cristallin (50), mais dans une direction sensiblement perpendiculaire à la précédente, c'est-à-dire à l'angle de Bragg afin que les rayons du faisceau laser soient défléchis dans une direction par la séquence test (X) et aussi dans la même direction par la séquence reçue (W), puis que l'on analyse les rayons résultants (Z) à leur sortie de l'unique corps cristallin (50), puis que l'on extrait les rayons défléchis (Z4, $Z'_1$-$Z'_2$) des rayons résultants Z, puis que, pour chaque bit des séquences (W et X), l'on considère afin de les comparer, les rayons (Z) non défléchis, les rayons ($Z'$, $Z'_1$) défléchis une fois et les rayons ($Z'_2$) défléchis deux fois.

EP 0 436 432 A1

Jouve, 18, rue Saint-Denis, 75001 PARIS

FIG.2

# PROCEDE POUR LA DETECTION, LA RECONNAISSANCE ET L'EXPLOITATION DE SIGNAUX MELES A D'AUTRES SIGNAUX DE CODAGE OU PARASITES ET DISPOSITIF POUR LA MISE EN OEUVRE DE CE PROCEDE

La présente invention concerne un dispositif permettant de capter et de reconnaître des signaux électriques mêlés à d'autres signaux qui en troublent l'accès direct, que ces autres signaux soient des parasites volontaires (brouillage hostile) ou involontaires (conditions de transmission), ou bien que ces autres signaux soient un codage de protection contre la reconnaissance des signaux caractéristiques par une personne non autorisée.

D'une manière générale, on appelle "bruit" l'ensemble des signaux non caractéristiques et qui troublent la détection et la reconnaissance des signaux qui constituent des messages : transmission d'informations, d'ordres ou d'autres éléments significatifs.

Une application du procédé conforme à l'invention concerne les systèmes de navigation et de positionnement par radio, ces systèmes comportant un récepteur de signaux qui sont émis par un ensemble de balises émettrices. Les balises sont situées soit sur la Terre (au sol ou sur mer), soit sur des satellites. Elles émettent périodiquement et de manière synchrone des signaux codés contenant les trois coordonnées spatiales et temporelle exactes de l'émission. Par recoupement entre les retards de propagation des signaux émis par plusieurs balises, et entre leurs coordonnées spatiales, le système de navigation ou de positionnement est apte à calculer la position de son récepteur.

Il existe d'autres applications de l'invention, par exemple dans le domaine des télécommunications, notamment à des fins de décodage.

Ainsi que cela est bien connu en soi, les signaux significatifs sont superposés à une émission à fréquence fixe appelée "fréquence porteuse" ou plus simplement "porteuse".

Suivant l'état de la technique, on capte les signaux au moyen d'un capteur tel qu'une antenne, un câble coaxial, un dispositif électro-optique ou analogue, selon le système de transmission choisi.

Le capteur est associé à un récepteur qui effectue la démodulation des signaux reçus pour séparer la fréquence porteuse et les signaux significatifs que l'on veut décoder.

Après ce prétraitement classique, on traite donc des signaux électriques constitués de l'onde à reconnaître et de bruit.

L'onde à reconnaître est généralement une succession de bits à fréquence fixe, un bit étant défini comme étant soit un niveau de tension, + V ou - V, soit l'alternance de deux tensions : de - V à + V (généralement de - 5 Volts à + 5 Volts) ou de + V à - V.

En vue de la reconnaissance des signaux voulus (des séquences de signaux élémentaires) sur la porteuse voulue, on connaît déjà le procédé qui consiste à effectuer ce que l'on nomme en mathématiques une convolution : il s'agit de générer une séquence de signaux, similaire à la séquence devant être reconnue et d'effectuer le produit des deux séquences à priori décalées. La sommation de ce produit sur la longueur de la séquence test constitue le résultat de la convolution. Ce produit de convolution est une fonction du décalage entre la séquence test et la séquence à reconnaître.

On sait que ce produit est maximum quand les deux séquences sont en phase, c'est-à-dire quand leur décalage est nul.

Une valeur en pic du produit de convolution signifie donc qu'il y a coïncidence parfaite entre la séquence test et la séquence reçue, c'est-à-dire une reconnaissance que la séquence reçue est bien celle recherchée.

Généralement, ces opérations sont effectuées électroniquement : la séquence test et la séquence reçue sont comparées bits par bits (signal élémentaire par signal élémentaire), c'est-à-dire que pour composer la séquence test on génère un premier bit identique au premier bit de la séquence à reconnaître puis, on met ce premier bit en phase avec le premier bit de la séquence reçue, puis on génère un deuxième bit identique au deuxième bit de la séquence à reconnaître, puis on met ce deuxième bit en phase avec le deuxième bit de la séquence à reconnaître et ainsi de suite.

Dès qu'un bit généré pour la séquence test n'est pas en phase avec le bit correspondant de la séquence reçue, on effectue à nouveau une mise en phase du premier bit généré avec un nouveau bit reçu et l'on recommence ainsi jusqu'à ce que chacun des bits de la séquence test soit exactement en phase avec chacun des bits correspondants de la séquence reçue.

Ce procédé est très long et malgré les progrès apportés à la vitesse de fonctionnement des unités de traitement associées (ordinateurs), il retarde de façon sensible la reconnaissance des séquences reçues. Par exemple, quand ce procédé est appliqué à un système de radionavigation, il retarde la détermination de la position du récepteur et, par conséquent, il donne des informations erronées puisqu'au moment où la position est fournie, le mobile qui porte le récepteur a parcouru une certaine distance et il se trouve à une autre position que celle indiquée.

L'incertitude née de la lenteur du procédé peut être de faible importance pour certains mobiles lents mais elle devient critique pour des mobiles très rapides : fusées, satellites, avions supersoniques, etc.

Les dispositifs actuellement les plus performants comportent une cellule de Bragg, c'est-à-dire un transducteur acousto-optique, composé essentiellement d'un corps cristallin, qui reçoit d'une part un rayonnement et d'autre part les signaux électroniques reçus, lesquels influencent le rayonnement restitué.

La cellule de Bragg est donc associée au récepteur et module un faisceau lumineux en fonction des signaux reçus. Des moyens sont prévus pour générer une séquence de signaux correspondant à une séquence à reconnaître et pour l'introduire dans la cellule de Bragg selon une direction sensiblement parallèle au sens de propagation des signaux reçus. Au moins un détecteur optoélectronique est disposé en aval de la cellule de Bragg, en considérant le sens de propagation du faisceau lumineux dans le corps cristallin, et une unité de traitement associée au détecteur optoélectronique détermine les variations de modulation du faisceau lumineux, soit pour en déduire l'instant de synchronisation de la séquence reçue et de la séquence test, soit pour provoquer un glissement de la séquence test par rapport aux séquences reçues jusqu'à l'obtention de la synchronisation, laquelle est caractérisée si et quand le détecteur optoélectronique reçoit une intensité lumineuse maximum, qui correspond au maximum de la fonction de convolution.

Avec un dispositif de ce type, le temps de mise en synchronisation de la séquence test et de la séquence à reconnaître dépend essentiellement du produit de la période de la séquence à reconnaître par le nombre de bits d'une séquence car il faut effectuer le produit de convolution autant de fois qu'il y a de bits dans une séquence, et la durée d'un produit de convolution est la période de la séquence à reconnaître.

La présente invention concerne un procédé qui améliore considérablement la rapidité d'un tel processus, soit pour le décodage de signaux, soit pour la reconnaissance de séquences, comme décrit ci-dessus, afin d'obtenir une synchronisation rapide d'une séquence test et d'une séquence reçue, malgré la présence d'un fort bruit masquant les signaux.

A cette fin, l'invention a pour objet un procédé pour la détection, la reconnaissance et l'exploitation de séquences significatives de signaux modulés sur une fréquence porteuse, mêlées à d'autres signaux ; du type selon lequel on génère une séquence test correspondant à la séquence à reconnaître toutes deux de profils coordonnés, puis que l'on transforme les signaux électriques de ces séquences en signaux ultra-sonores, puis que l'on conduit la séquence test et une séquence reçue après transformation en signaux ultra-sonores à un unique corps cristallin du genre cellule de Bragg, pour que ces deux séquences parcourent parallèlement ledit corps cristallin unique caractérisé en ce que, simultanément, on dirige un faisceau laser dans l'unique et même corps cristallin, mais dans une direction sensiblement perpendiculaire à la précédente, c'est-à-dire à l'angle de Bragg afin que les rayons du faisceau laser soient défléchis dans une direction par la séquence test et aussi dans la même direction par la séquence reçue, puis que l'on analyse les rayons résultants à leur sortie de l'unique corps cristallin, puis que l'on extrait les rayons défléchis des rayons résultants, puisque, pour chaque bit des séquences, l'on considère afin de les comparer, les rayons non défléchis, les rayons défléchis une fois et les rayons défléchis deux fois.

Selon d'autres caractéristiques de ce procédé :

– on conduit la séquence test et la séquence reçue dans l'unique corps cristallin dans deux sens opposés d'une même direction ;

– on conduit la séquence test et la séquence reçue dans l'unique corps cristallin toutes deux dans le même sens de la même direction ;

– on démodule les rayons du faisceau laser à leur sortie de l'unique corps cristallin à une fréquence double de celle du décalage constaté entre un rayon non défléchi et un rayon défléchi une fois ;

– on démodule l'amplitude des rayons du faisceau laser à leur sortie de l'unique corps cristallin à une fréquence double de celle de la fréquence test se propageant dans l'unique corps cristallin ;

– pour distinguer un rayon non défléchi d'un rayon défléchi deux fois, on mesure la différence de fréquence existant entre eux, du fait de l'effet Doppler-Fizeau ;

– on analyse les rayons résultants à leurs sorties de l'unique corps cristallin puis, pour chaque bit de séquence que l'on considère, et afin de réaliser l'hétérodynage optique, on asservit la fréquence du signal ultra-sonore à la fréquence de la séquence reçue en fonction de l'amplitude de la différence de fréquence résultant de l'effet Doppler Fizeau existant entre un rayon défléchi deux fois et un rayon non défléchi ;

– la longueur de la séquence à reconnaître en transit dans l'unique corps cristallin est supérieure à celle de la séquence test correspondante ;

– la sequence à reconnaître la plus longue est au plus égale à la longueur de l'unique corps cristallin ;

– la séquence la plus courte est inférieure à la moitié de celle de l'unique corps cristallin ;

– on effectue une compression des séquences pour qu'au moins une des séquences complètes puisse être toute entière dans l'unique corps cristallin ;

– on échantillonne et l'on mémorise le signal à une fréquence donnée, puis on relit ledit signal à une fréquence supérieure à la fréquence donnée ;

– on émet un faisceau laser de section quelconque puis que l'on transforme optiquement ce faisceau pour qu'il s'étende, dans l'unique corps cristallin, en une nappe située dans un plan perpendiculaire à la direction des séquences ;

– on lit les informations stockées dans chaque mémoire numérique selon une fréquence de lecture supérieure à la fréquence d'écriture afin d'adapter la durée de la séquence lue et à traiter aux caractéristiques de propagation propres à l'unique corps cristallin puis que l'on adapte à cette même durée la séquence test générée ;

– on démodule et que l'on intègre le signal reçu sur des périodes de durée au moins égale à une fraction de celle d'un bit élémentaire de la séquence à reconnaître, que l'on convertit en signaux numériques le résultat de cette intégration et que l'on stocke dans au moins une mémoire numérique ces signaux numériques à la fréquence d'émission de la séquence à reconnaître ;

– on démodule et que l'on intègre le signal reçu sur une période de durée égale à celle d'un bit élémentaire de la séquence à reconnaître ;

– on stocke dans au moins une mémoire numérique un nombre de valeurs du résultat de l'intégration qui correspond à un échantillonnage successif du signal reçu au moins égal à deux fois le nombre de bits élémentaires de la séquence à reconnaître ;

– on mémorise deux séries de valeurs à la fréquence de la séquence à reconnaître, l'un des séries correspondant à la valeur du résultat de l'intégration sur une durée coïncidant avec celle de la première moitié de la période d'intégration et l'autre des séries correspondant à la valeur du résultat de l'intégration sur une période coïncidant avec celle de la seconde moitié de la période d'intégration.

L'invention a également pour objet un dispositif pour la détection, la reconnaissance et l'exploitation de séquences significatives de signaux modulés sur une fréquence porteuse, mêlées à d'autres signaux, du type comportant un générateur d'une séquence test correspondant à la séquence à reconnaître toutes deux de profils coordonnés, un transducteur des signaux électriques de ces séquences en signaux ultra-sonores, un corps cristallin du genre cellule de Bragg muni de connexions pour une séquence test et pour une séquence reçue caractérisé en ce qu'il comprend un récepteur-démodulateur de séquences de signaux à reconnaître, un générateur de séquences de signaux test, un unique corps cristallin du genre cellule de Bragg auquel sont reliés respectivement le récepteur-démodulateur et le générateur, un projecteur de faisceau laser et un récepteur des rayons issus de ce faisceau placés tous deux en regard de deux faces opposées du corps cristallin, ce récepteur de rayons étant associé à un détecteur susceptible de différencier les rayons non défléchis, les rayons défléchis une fois et les rayons défléchis deux fois.

Selon d'autres caractéristiques de ce dispositif :

– le récepteur de rayons est associé à un démodulateur réglé pour démoduler des signaux électriques ayant une fréquence différente de deux fois celle du signal ultra-sonore se propageant dans l'unique corps cristallin ;

– le démodulateur associé au récepteur de rayons comporte un fréquencemètre de sensibilité adaptée à la perception des différences possibles entre la fréquence des rayons directs et la fréquence des rayons défléchis, ce fréquencemètre étant relié à un calculateur ;

– il comprend d'une part un commutateur qui autorise l'accès alternatif à l'une des deux mémoires où sont stockées les valeurs de la séquence à reconnaître et, d'autre part, un commutateur qui autorise l'accès alternatif à la mémoire où sont stockées les valeurs de la séquence test ;

– il comprend des moyens d'acquisition des séquences à reconnaître, qui comprennent en combinaison un intégrateur, un convertisseur analogique-numérique et au moins deux mémoires devant contenir les valeurs numériques des séquences à reconnaître, des moyens de transcription des valeurs des séquences à reconnaître mémorisées qui comprennent en combinaison un convertisseur numérique-analogique et un modulateur et en ce qu'il comprend au moins une mémoire devant contenir les valeurs des séquences test ;

– il comprend un filtre du type filtre passe-bande et un détecteur d'enveloppe qui sont disposés entre le récepteur et le détecteur à seuil ;

– il comprend des moyens pour gérer la synchronisation des reconnaissances successives des séquences à reconnaître et déterminer des pics de corrélation ainsi qu'au moins un détecteur de seuil ;

L'invention sera mieux comprise par la description détaillée ci-après, faite en référence au dessin annexé. Bien entendu, la description et le dessin ne sont donnés qu'à titre d'exemple indicatif et non limitatif.

La figure 1 est un schéma illustrant le phénomène de déflexion de rayons lumineux par un signal électromagnétique, tel qu'il se produit conformément à l'invention à leur sortie d'une cellule de Bragg.

La figure 2 est un schéma illustrant l'invention à un instant de fonctionnement où une séquence test et une séquence reçue se propagent dans une cellule de Bragg en sens inverses et ne sont pas en phase.

La figure 3 est un schéma illustrant l'invention à un instant de fonctionnement où une séquence test et une séquence reçue se propagent dans une cellule de Bragg en sens inverses et sont en phase.

La figure 4 représente un schéma bloc de l'ensemble du dispositif.

La figure 5 represente un schéma partiel illustrant le cheminement des signaux ultra-sonores à travers la cellule de Bragg.

La figure 6 est une vue schématique qui représente graphiquement le signal et son intégration sur une durée correspondant à une demi période d'un bit élémentaire.

La figure 7 est une vue schématique qui représente graphiquement le signal et son intégration sur une durée correspondant à deux tiers de période d'un bit élémentaire.

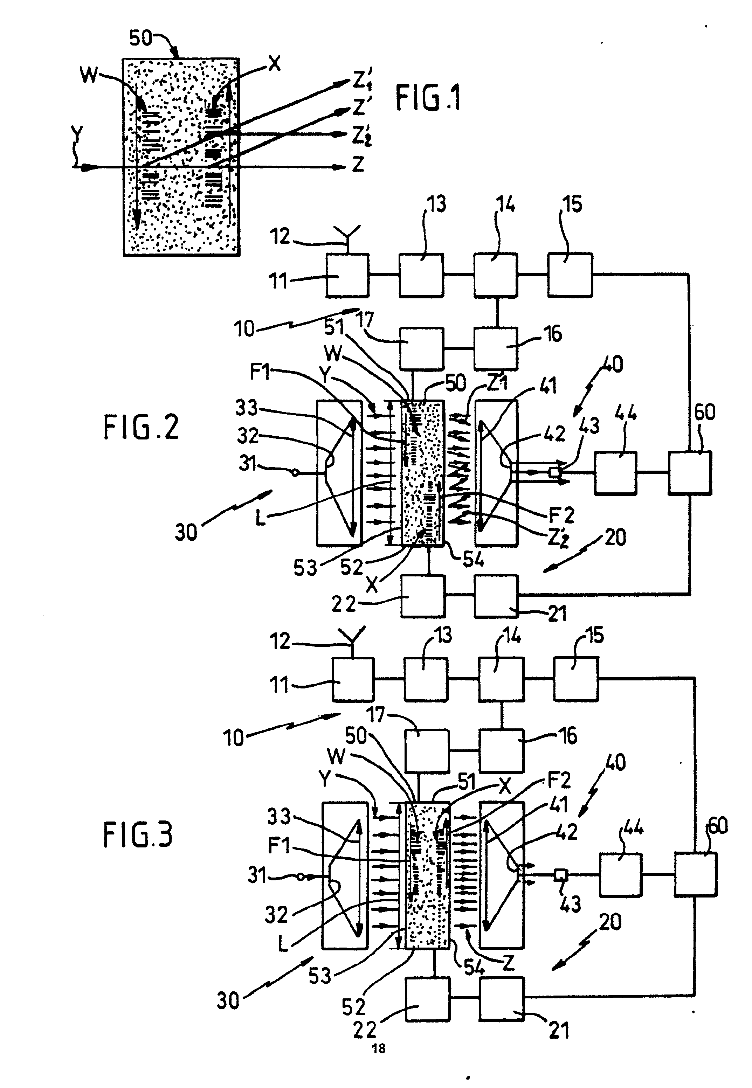

En se référant à la figure 1, on voit le phénomène de réflexion des rayons lumineux par un signal électro-magnétique à la sortie d'un corps cristallin du genre cellule de Bragg 50. Cette cellule de Bragg 50, qui est un transducteur acousto-optique, module, en fonction des signaux reçus, un signal lumineux. A cet effet, on dirige des rayons lumineux, issus d'un faisceau laser, à l'entrée de l'une des faces de la cellule de Bragg 50. Par ailleurs, on transforme des ondes électro-magnétiques de signaux électriques en signaux ultrasonores. Ensuite, on introduit, dans une direction sensiblement perpendiculaire à celle des rayons lumineux, une séquence test X et une séquence reçue W après leur transformation en signaux ultra-sonores à l'intérieur de la cellule de Bragg.

D'une manière avantageuse, on introduit la séquence test X et la séquence reçue W dans la cellule de Bragg 50 soit dans deux sens opposés d'une même direction (figure 1), soit dans le même sens d'une même direction.

Une partie des rayons lumineux Y du faisceau laser sont réfléchis dans une direction déterminée tout d'abord selon un angle correspondant à l'angle de Bragg par la séquence reçue W, puis par la séquence test en deux faisceaux de rayons résultants distincts ($Z'_2$ $Z'_1$). Le premier faisceau de rayons $Z'_2$ se propage dans une direction parallèle à la direction d'introduction des rayons lumineux Y. Le second faisceau $Z'_1$ de rayons se propage dans une direction déterminée parallèle a l'angle de Bragg.

De même, la partie des rayons lumineux Y du faisceau laser non réfléchis par la séquence W sont réfléchis dans une direction déterminée par la séquence test X en un faisceau de rayons réfléchis ($Z'$). Ce faisceau de rayons $Z'$ se propage dans une direction déterminée correspondant à la direction de l'angle de Bragg afin d'être parallèle au faisceau $Z'_1$. Il en résulte, à la sortie de la cellule de Bragg, une réparation du faisceau de rayon lumineux laser Y en quatre faisceaux distincts $Z'_1$, $Z'$, $Z'_2$ et Z.

Ainsi, selon l'invention, en utilisant des moyens électroniques appropriés, on sépare les rayons réfléchis ($Z'_1$, $Z'$ et $Z'_2$) des rayons non réfléchis Z et on analyse par des methodes de comparaison, les rayons non réfléchis Z, les rayons défléchis une fois ($Z'_1$ et $Z'$) et les rayons défléchis deux fois ($Z'_2$).

En se reportant au dessin, on voit qu'un procédé conforme à l'invention s'incarne dans un dispositif qui comprend :

- un ensemble 10 pour le traitement des séquences à recevoir,
- un ensemble 20 pour le traitement des séquences test,
- un ensemble 30 pour l'émission d'un rayonnement lumineux,
- un ensemble 40 pour la réception du rayonnement lumineux,
- une cellule de Bragg 50,
- un calculateur 60 accompagné d'un moyen de délivrance de données.

L'ensemble 10 comporte un récepteur radio 11 muni d'une antenne 12, un démodulateur 13, une mémoire 14, un lecteur 15 de la mémoire 14, un modulateur 16 et un transducteur 17 recevant des signaux électriques correspondant aux séquences reçues et fournissant des signaux ultra-sonores à la face 51 de la cellule de Bragg 50.

L'ensemble 20 comporte un modulateur 21 générant, à partir d'un programme de commande du calculateur 60, des signaux électriques correspondant aux séquences test, à un transducteur 22 qui fournit des signaux ultra-sonores à la face 52 de la cellule de Bragg opposée à la face 51.

L'ensemble 30 comporte une source lumineuse 31 et des moyens optiques 32-33 situés en regard d'une face 53 de la cellule de Bragg 50 adjacente aux deux faces opposées 51 et 52.

L'ensemble 40 comprend des moyens optiques 41-42 qui sont situés en regard de la face 54 de la cellule de Bragg 50 adjacente aux faces 51 et 52 et, donc, opposée à la face 53, et qui focalisent le rayonnement lumineux reçu de la source 31 à travers la cellule de Bragg 50 sur un dispositif photoélectrique tel qu'une photodiode 43 reliée à un démodulateur 44.

La source de rayonnement 31 est un projecteur laser dont le faisceau est transformé par les moyens optiques 32-33 en une nappe de rayons parallèles, s'étendant dans un plan perpendiculaire à la fois aux faces 51 et 52, et aux faces 53 et 54, c'est-à-dire dans le plan de la figure.

Ce dispositif met en oeuvre le procédé conforme à l'invention et fonctionne de la manière suivante :

Le démodulateur 13 extrait les séquences de signaux reçues, portées par une fréquence connue sur laquelle on accorde le récepteur 1. Chacune de ces séquences constitue un système d'échantillonnage de signal introduit dans la mémoire 14. L'échantillonnage est effectué à la fréquence $\underline{f}1$ du signal.

La lecture de la mémoire 14 se fait à une fréquence dite "fréquence de lecture" FL et le modulateur 16 fournit un signal à une fréquence dite "fréquence du signal" FS.

Le signal électrique fourni par la photodiode 43 est démodulé par le démodulateur 44 à la fréquence 2FS et le résultat de la démodulation, qui est le produit de convolution, est détecté et enregistré par le calculateur 60.

Simultanément, le calculateur 60 génère la fréquence FL et des séquences de signaux électriques à la fréquence FL, chaque séquence étant l'inversion dans le temps de la séquence à reconnaître. Celle-ci est modulée à la fréquence FS par le modulateur 21, du même type que le modulateur 16, et est introduite dans la cellule de Bragg 50 par le transducteur 22.

Sur la figure 2 la séquence reçue W et la fréquence test X sont décalées et des rayons lumineux parallèles Y à l'entrée da la face 53 sont défléchis à la sortie de la face 54 selon Z'1 et/ou Z'2, par rapport à leur orientation Z (qui, si elle était inchangée, serait évidemment la même que celle des rayons émis Y), selon les sens de propagation des séquences W et X indiqués par des flèches respectivement F1 et F2. La valeur de cette déflexion est :

$$\frac{-V\lambda}{FS}$$

qui est décalée en fréquence, de la valeur de FL, V étant la vitesse de propagation des ultra-sons dans le cristal de la cellule de Bragg et la longueur d'onde du rayonnement Y-Z).

Sur la figure 3, les deux séquences reçue W et test X, similaires, se superposent et des rayons défléchis de :

$$\frac{+V\lambda}{F}$$

une première fois, sont défléchis une seconde fois de :

$$\frac{-V\lambda}{F}$$

en étant décalés en fréquence de 2FS. Ces rayons interfèrent sur la photodiode 43 avec les rayons qui n'ont pas été défléchis et qui n'ont pas été décalés en fréquence.

Ainsi, les séquences reçues W se propagent dans le cristal de la cellule de Bragg 50 jusqu'au moment où elles se superposent aux séquences test X qui se propagent en sens inverse. Au moment où deux séquences W et X se superposent, le produit de convolution atteint une valeur maximum qu'il est facile de détecter physiquement.

En utilisant une seule cellule de Bragg, on réalise un dispositif compact éliminant les problèmes d'hétérogénéité de matière ou de déviation de faisceaux lumineux tels qu'ils peuvent survenir lorsque l'on utilise deux cellules de Bragg accolées.

Selon encore un aspect avantageux de l'invention, la compression des signaux électriques des séquences à reconnaître permet de donner au signal ultra-sonore W une longueur qui ne dépasse pas la moitié de la longueur L de la cellule 50 (distance qui sépare les faces opposées 51 et 52).

La compression du signal est effectuée soit de manière analogique, soit de manière numérique au moyen d'un circuit électronique de type connu qui fait partie de l'ensemble récepteur 11 - démodulateur 13, afin que celui-ci délivre des signaux comprimés.

La compression consiste à effectuer un échantillonnage des signaux reçus à la fréquence $\underline{f}1$, à stocker les

valeurs échantillonnées dans la mémoire 14 (soit analogique, soit numérique), dont la capacité est d'au moins N bits (N est au moins le double du nombre de bits des séquences à reconnaître). Les N valeurs échantillonnées successives sont affectées à N adresses successives de la mémoire 14.

Après un échantillonnage de N valeurs des signaux reçus et une affectation de ces N échantillons à leurs adresses successives, une lecture des N échantillons successifs stockés dans la mémoire 14 à une fréquence de lecture FL supérieure à $\underline{f}$1 permet de générer des signaux ultra-sonores qui sont la compression des signaux électriques reçus.

La valeur de FL est choisie de telle sorte que :

$$\frac{(N).V}{FL} < L$$

ce qui signifie que la longueur totale du signal ultra-sonore (N bits d'une durée 1/FL multipliés par la vitesse de propagation V du signal ultra sonore) est inférieure à la longueur L de la cellule 50.

Grâce à la compression du signal ultra-sonore introduit dans la cellule 50, sa durée de traitement est réduite du facteur FL/$\underline{f}$1, ce qui permet d'effectuer plusieurs essais de convolution pendant le temps d'échantillonnage du signal reçu et de remplissage de la mémoire ; ce temps est égal à N/$\underline{f}$1.

Selon cette version, chaque séquence test X est générée inversée dans le temps par rapport à la séquence à reconnaître correspondante W et selon la fréquence de lecture FL, de telle sorte que les deux séquences à reconnaître W et test X puissent effectivement se superposer.

Enfin, la fonction de convolution des signaux des deux séquences W et X se propageant en sens inverses dans la cellule 50, est proportionnelle au signal électrique transmis au calculateur 60, via le démodulateur 44, par la photodiode 43 de réception du faisceau laser Z ayant traversé la cellule 50.

En effet, selon une version avantageuse de l'invention, les signaux reçus W et test X sont associés (multipliés par) à un signal stable de fréquence fixe FS supérieure à FL.

Un signal de fréquence stable FS se propageant dans une cellule constitue un réseau plan appelé justement "réseau de Bragg". L'effet d'un réseau de Bragg sur un faisceau laser est de défléchir une partie de la lumière de :

$$\frac{V\lambda}{FS}$$

et de décaler la fréquence des rayons lumineux de :

FS

Une partie importante de la lumière n'est pas défléchie et conserve sa fréquence de base : c'est l'ordre 0.

L'effet des séquences test consiste donc à défléchir une partie des rayons lumineux dans le sens de propagation des séquences test d'un angle égal à :

$$\frac{V\lambda}{FS}$$

d'augmenter la fréquence des rayons défléchis de la valeur FS : c'est l'ordre + 1, et à défléchir une partie quasi négligeable des rayons lumineux dans le sens opposé en diminuant leur fréquence de la valeur FS : c'est l'ordre - 1.

L'effet des séquences reçues consiste à défléchir une partie des rayons lumineux dans le sens de propagation des séquences reçues d'un angle égal, cette fois, à :

$$- \frac{v\lambda}{FS}$$

et d'augmenter la fréquence des rayons réfléchis de la valeur FS.

Une partie négligeable est défléchie d'un angle égal à :

$$+ \frac{v\lambda}{FS}$$

avec une baisse de fréquence de + FS.

Quand les séquences se superposent exactement, le faisceau lumineux comporte un terme non défléchi de fréquence fondamentale superposé à un terme défléchi de :

$$+ \frac{v\lambda}{FS} - \frac{v\lambda}{FS} = 0$$

et de fréquence augmentée deux fois, soit de 2 FS.

Ce terme interfère avec l'ordre 0 et la fréquence de la modulation de l'amplitude de l'interférence est de 2 FC.

Quand les séquences sont décalées, une partie de la lumière est défléchie de :

$$+ \frac{v\lambda}{FS}$$

avec un décalage de + FS, une autre de :

$$- \frac{v\lambda}{FS}$$

avec le même décalage de FS, mais il n'y a pas de compensation de la déflection ni de faisceau décalé en fréquence de 2 FS.

Ainsi, suivant ce principe, le dispositif de conversion photoélectrique, la photodiode 43 par exemple, reçoit l'ordre O par l'intermédiaire d'une optique et le signal électronique émis par la photodiode 43 est proportionnel à l'amplitude de la lumière reçue.

L'intensité lumineuse est modulée à 2 FS quand les séquences reçue W et test X sont superposées.

C'est pourquoi le dispositif comporte un démodulateur 44 à la fréquence 2 FS en phase avec le signal de modulation.

Par conséquent, un maximum positif ou négatif de la fonction démodulée correspond à une superposition de deux séquences, respectivement reçue W et test X.

Le résultat de la convolution est, au signe près, la démodulation du signal de l'intensité lumineuse à la fréquence 2 FS.

Ainsi, le dispositif permet d'avérer la reconnaissance des signaux, à l'instant exact de leur arrivée, par la constatation à l'instant de la détection d'un pic de convolution.

L'évolution du signal de convolution peut constituer un signal correspondant au décodage du signal reçu.

Comme on l'a précisé plus haut, on réalise une comparaison "bit par bit" de deux familles de rayons modulés en phase selon une différence de phase de 0 ou de π.

En outre, on prend en considération l'ordre O afin de réaliser un hétérodynage optique et donc d'obtenir une réponse en amplitude qui donne la valeur relative sur le signe du signal.

Bien entendu, l'invention est susceptible de variantes de réalisations qui apparaîtront à l'homme de métier, sans sortir du cadre de l'invention. En particulier, les systèmes optiques peuvent être différents de ceux précisément décrits. Quant aux modes de compression, de modulation et démodulation des signaux, l'homme de métier sait parfaitement les réaliser en fonction des applications envisagées et il n'est donc pas nécessaire de les décrire plus en détail qu'on ne l'a fait.

Notamment, on utilise une compression d'impulsions d'un type classique et connu qui est fréquemment mis en oeuvre dans des systèmes où le rapport signal sur bruit à l'entrée d'un dispositif d'analyse et de traitement de signal est négatif. Ce rapport signal sur bruit définit la qualité du signal et il est mathématiquement déterminé par la formule :

$$\Sigma = 10 \log^{10} \frac{\text{puissance moyenne du signal utile}}{\text{puissance moyenne du bruit}}$$

Dans le système G P S par exemple, ce rapport est fortement négatif (de l'ordre de - 20 décibels). Il est donc nécessaire d'obtenir un facteur de compression de 30 db pour pouvoir détecter le signal à la sortie avec un gain de 10 db. Afin d'obtenir de tels résultats, on utilise des codes pseudo-aléatoires de durée équivalente à une milliseconde et qui possède 1023 bits élémentaires.

Pour effectuer ces différentes opérations, on utilise des moyens électroniques de calcul de type connu.

La séquence test et la séquence reçue sont comparées bit par bit, c'est-à-dire signal élémentaire par signal élémentaire. On compense ainsi la séquence test en générant un premier bit identique au premier bit de la séquence à reconnaître, puis on met ce premier bit en phase avec le premier bit de la séquence reçue. Ensuite on génère un deuxième bit identique au deuxième bit de la séquence à reconnaître, puis on met ce deuxième bit en phase avec le deuxième bit de la séquence à reconnaître et ainsi de suite.

Dès qu'un bit généré pour la séquence test n'est pas en phase avec le bit correspondant de la séquence reçue, on affecte à nouveau une mise en phase du premier bit généré avec un nouveau bit reçu et l'on recommence ainsi jusqu'à ce que chacun des bits de la séquence test soit exactement en phase avec chacun des bits correspondants de la séquence reçue.

Malgré l'évolution de la rapidité de la vitesse de fonctionnement des moyens de traitement associés tels que des ordinateurs, ce procédé demeure relativement long et complexe à mettre en oeuvre. Cette lenteur peut être dans certains cas de détermination de la position de l'émetteur par le récepteur, une source d'erreur et d'incertitude très préjudiciable.

Pour remédier à cet inconvénient, il existe actuellement des dispositifs plus rapide qui comportent une cellule de Bragg, c'est-à-dire un transducteur acousto-optique, composé essentiellement d'un corps cristallin qui reçoit d'une part un rayonnement et d'autre part les signaux électroniques reçus, lesquels influencent le rayonnement restitué.

La cellule de Bragg est donc associée au récepteur et module un faisceau lumineux en fonction des signaux reçus. Des moyens sont prévus pour générer une séquence de signaux correspondant à une séquence à reconnaître et pour l'introduction dans la cellule de Bragg selon une direction sensiblement parallèle au sens de propagation des signaux reçus. Au moins un détecteur opto-électronique est disposé en aval de la cellule de Bragg, en considérant le sens de propagation du faisceau lumineux dans le corps cristallin, et une unité de traitement associée au détecteur opto-électronique détermine les variations de modulation du faisceau lumineux, soit pour en déduire l'instant de synchronisation de la séquence reçue et de la séquence test, soit pour provoquer un glissement de la séquence test par rapport aux séquences reçues jusqu'à l'obtention de la synchronisation, laquelle est caractérisée si et quand le détecteur opto-électronique reçoit une intensité lumineuse maximum qui correspond au maximum de la fonction de convolution.

Avec ces dispositifs, le temps de mise en synchronisation de la séquence test et de la séquence à reconnaître dépend essentiellement du produit de la période de la séquence à reconnaître par le nombre de bit d'une séquence, comme décrit ci-dessus afin d'obtenir une synchronisation rapide d'une séquence test et d'une séquence reçue malgré la présence d'un fort bruit de fond masquant les signaux qui transportent les informations.

Or, il est primordial que la cellules de Bragg utilisée et le signal à traiter soient adaptés l'un à l'autre.

Il est à noter que, dans la plupart des applications, le signal significatif est porté par un signal haute fréquence. Or, Lorsque ce signal haute fréquence est affecté d'un décalage inconnu, ce qui est en particulier le cas pour des systèmes de navigation et de positionnement radio qui reçoivent les signaux émis à partir d'émetteurs disposés sur un satellite, la reconnaissance des informations transmises devient difficile.

L'invention améliore considérablement la rapidité de la détermination de l'intensité lumineuse maximum qui correspond au maximum de la fonction de convolution tout en permettant une compensation des bruits de fond.

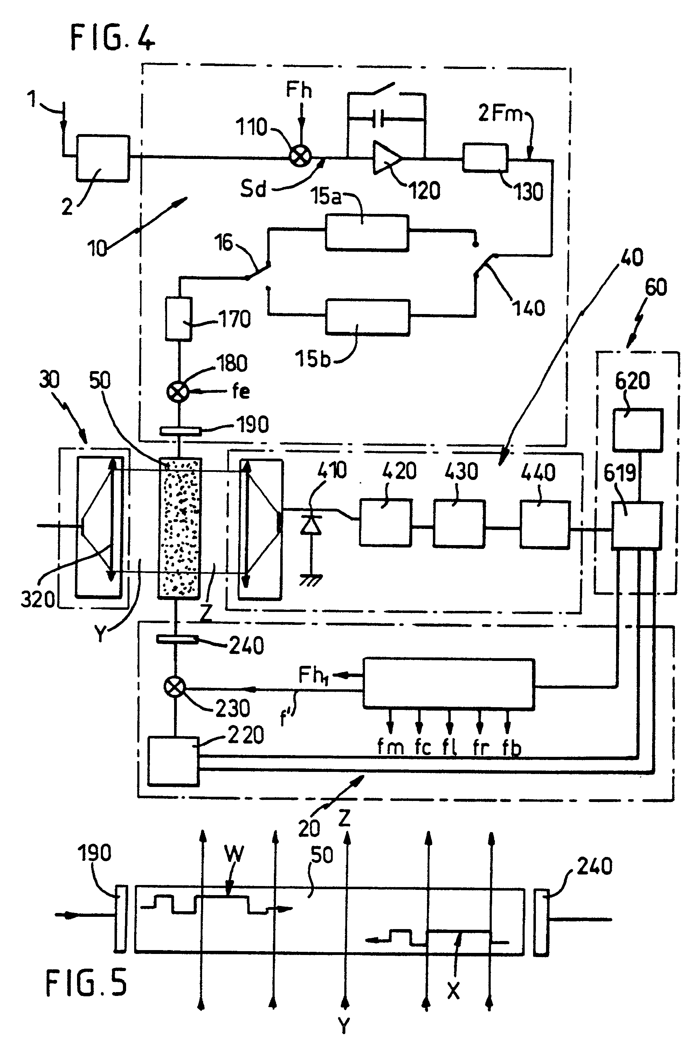

En se reportant a la figure 4, on voit qu'un procédé conforme à l'invention est mis en oeuvre à partir d'un dispositif qui comprend en combinaison :
- Une antenne 1 et un amplificateur 2.
- Un ensemble 10 pour le traitement des séquences à reconnaître.
- Un ensemble 20 pour le traitement des séquences tests.
- Un ensemble 30 pour l'émission des rayons lumineux.
- Un ensemble 40 pour la réception des rayons lumineux.
- Une cellule de Bragg 50.
- Un ensemble calculateur 60 pour le traitement et le stockage des signaux.

Dans la plupart des applications de ce procédé et du dispositif pour sa mise en oeuvre, le signal reçu est un signal qui est porté par des ondes porteuses émises avec une fréquence qui est située dans une gamme comprise entre $10^8$ hertz et $10^{10}$ hertz et de préférence avec une fréquence de l'ordre du gigahertz c'est-à-dire une fréquence de $10^9$ herzt.

Cette fréquence sera, dans toute la description qui suit, appelée Fh.

C'est ainsi que dans le cadre particulier de l'application au positionnement par satellite à partir de système tel que le système couramment dénommé système G P S, le code émis par les satellites module cette haute fréquence de manière à émettre un signal porté par des ondes porteuses de fréquence moyenne et généralement proche du mégahertz, c'est-à-dire une fréquence de $10^6$ hertz. Cette fréquence sera dans toute la description qui suit appelée Fm.

L'émission de ce code s'effectue pendant un temps qui correspond sensiblement à celui de mille périodes du signal de fréquence moyenne Fm. Il est répété avec un signe constant à une fréquence de l'ordre du kilohertz, c'est-à-dire une fréquence de $10^3$ hertz appelée Fr, et il change de signe à une fréquence de l'ordre de 50 hertz appelée Fb.

Bien évidemment dans d'autres applications que celle du positionnement par satellite par système G P S, les fréquences utilisées peuvent être différentes mais le traitement du signal reste analogue.

Ce traitement de signal tel qu'il va être décrit ci-dessous permet de reconnaître et traiter un code porté par un signal, par exemple noyé dans le bruit, et mélangé à d'autres codes qui pourront être successivement reconnus.

Dans le cadre de l'application au système G P S, le signal de haute fréquence reçu est affecté par un décalage en fréquence pour différentes raisons et notamment afin d'éviter sa reconnaissance par des personnes non autorisées. Ce décalage en fréquence est inconnu et il est généralement obtenu par effet Doppler Fizeau qui est un phénomène qui se produit lorsqu'une source de vibrations (sons, ultra-sons) ou de rayonnement électro-magnétique (lumière, onde radio, etc...) de fréquence donnée est en mouvement par rapport à un observateur, ce qui se traduit pour celui-ci par une modification de la fréquence reçue. Bien évidemment, il est aussi envisageable d'avoir recours à tout autre type de dispositif qui permet de générer un décalage de fréquence.

Ce décalage en fréquence est de l'ordre de $10^4$ hertz et il sera appelé dFh dans toute la suite de la description, dans le cadre de l'application au GPS.

Le signal Fh + dFh est reçu par une antenne 1. Ce signal est, après sa réception, amplifié par un amplificateur 2 qui a été préalablement réglé pour être calé sur une fréquence sensiblement égale à Fh.

Le signal Fh + dFh est ensuite modulé par un modulateur 110 de manière à correspondre à un signal de fréquence de base Fm à dFh près.

Le signal démodulé Sd est intégré par un intégrateur 120 pendant un temps correspondant à celui d'une demi-période du signal à reconnaître la (de base Fm), c'est-à-dire sur une durée égale à la moitié d'un bit élémentaire du code à reconnaître. Après cette intégration, ce signal est converti par un convertisseur analogique numérique 130 en un signal numérique de fréquence 2 Fm.

Ce signal numérique de fréquence 2 Fm est stocké alternativement dans l'une des deux mémoires 150a, 150b par un commutateur 14 qui commute alternativement avec une fréquence identique à celle du signal numérique, c'est-à-dire avec une fréquence de commutation de 2 Fm. De cette façon, on stocke en mémoire les 2046 valeurs consécutives de deux signaux codés successifs, le signal du GPS étant constitué de 1023 valeurs consécutives.

A la fin de chaque demi-période, on réinitialise l'intégration du signal. De même, on effectue la conversion analogique-numérique ainsi qu'un changement d'état du commutateur 140.

Le temps de remplissage des deux mémoires 150a et 150b s'effectue durant un temps qui correspond à celui d'émission de deux codes successifs, c'est-à-dire environ deux millisecondes.

Donc, après la mémorisation de ces deux codes, l'une des mémoires 150a ou 150b contient un code qui est synchronisé avec celui de l'échantillonnage tandis que l'autre mémoire 150b ou 150a contient un code qui est désynchronisé de deux millisecondes.

Bien que le début de la mémorisation du code dans les deux mémoires 150a et 150b puisse être désynchronisé par rapport à la réception du début de ce code, le code est enregistré intégralement dans les mémoires 150a et 150b car le temps nécessaire au chargement de celui-ci dans ces mémoires 150a et 150b est supérieur à deux fois la durée totale du code proprement dit qui est enregistré en deux millisecondes.

Pendant que l'on charge la mémoire 150b (commutateur 140 en position basse), on lit les codes mémorisés précédemment dans la mémoire 150a à une fréquence de lecture FI supérieure à la fréquence de base Fm pour comprimer le signal afin de l'introduire dans le convertisseur numérique-analogique 170 précédant la cellule de Bragg 50.

Ainsi, la compression du signal permet d'utiliser une cellule de Bragg 50 aussi petite que possible car on adapte le signal à traiter à la cellule et non l'inverse.

Cette compression temporelle du signal par des moyens numériques au moyen d'une acquisition et d'une lecture sur deux mémoires différentes permet d'obtenir, pour un signal du type GPS, un rapport de la fréquence de lecture sur la fréquence d'acquisition qui est voisin de vingt.

Toutefois, pour pouvoir réaliser et obtenir un tel rapport, on ne peut utiliser des méthodes classiques et notamment la méthode dite de Shannon. En effet, le récepteur du système GPS utilise un signal nécessairement noyé dans le bruit et la méthode de Shannon par exemple nécessiterait soit un échantillonnage excessif pour éliminer ledit aléa du bruit de fond, soit un résultat faux si l'on prend trop peu d'échantillons.

La solution apportée par l'invention à ce problème consiste à relever l'énergie du bit élémentaire de la séquence à reconnaître par une intégration de celui-ci, puis à convertir la valeur de cette intégrale en information numérique.

Ainsi, on parvient à un échantillonnage raisonnable permettant une lecture rapide et, donc, un rapport assurant la compression à la valeur adaptée au mieux aux possibilités de la cellule de Bragg, et, avec le système GPS par exemple à un rapport :

$$\frac{\text{Fréquence de lecture}}{\text{Fréquence d'acquisition}} = 20$$

Ce traitement du bit élémentaire est un traitement qui est parfaitement linéaire. Toutefois, en raison du fait que la synchronisation avec la séquence reçue est purement aléatoire et inconnue, il est impossible de garantir une durée d'intégration qui corresponde exactement à celle d'un bit élémentaire.

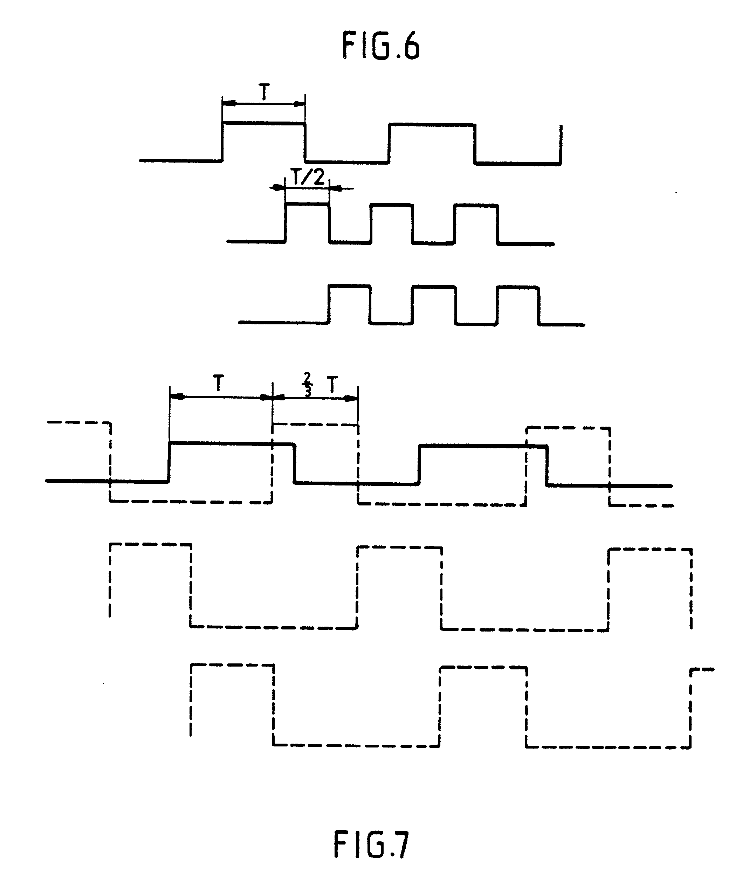

Pour y parvenir, on réalise l'intégration sur une durée limitée qui correspond au maximum à une demi-période d'un bit élémentaire, et l'on double le nombre de valeurs intégrées, l'intégration de ces valeurs se faisant comme illustré à la figure 6. Pour ce faire, on effectue l'intégration en doublant le nombre de valeurs intégrées de telle façon que l'on intègre la seconde valeur durant une période qui correspond à la période de non intégration de la première.

Le choix de l'intégration sur une durée correspondant à une demi période d'un bit élémentaire, bien que générant une atténuation de 3 db du rapport signal sur bruit, en raison de l'utilisation de la moitié de l'énergie du signal, permet avantageusement d'obtenir un asservissement rapide et simple, en limitant le nombre d'essais successifs. On obtient ainsi une acquisition rapide et fidèle des valeurs.

Il est aussi envisageable de réaliser l'intégration sur une durée limitée qui correspond à une autre fraction de la période du bit élémentaire du code à reconnaître, comme illustré par la figure 7, où l'on effectue cette intégration sur une durée égale aux deux tiers de la période d'un bit élémentaire.

Le tableau ci-après illustre une comparaison entre la durée de l'intégration par rapport à la durée d'un bit élémentaire, et l'atténuation du rapport signal sur bruit en décibels, ainsi que le nombre d'essais successifs nécessaires à un résultat satisfaisant.

| Duréé d'intégration | Nombre d'essais | Chute du rapport signal/bruit |
|---|---|---|
| 2/3 T | 3 | 1,7 dB |
| 3/4 T | 4 | 1,2 dB |
| 7/8 T | 8 | 0,6 dB |

En se référant à ce tableau, on constate que :

– plus la durée d'intégration par rapport à un bit élémentaire est proche de sa période, plus il est nécessaire de réaliser un nombre important d'essais ;

– plus la durée d'intégration par rapport à un bit élémentaire est proche de sa période, plus l'atténuation du rapport signal sur bruit tend vers une valeur faible.

Il apparaît donc clairement que le nombre d'essais croît considérablement dès que l'on considère des durées d'ingration proches de la période du bit élémentaire.

La lecture des mémoires 150a-150b est autorisée par le commutateur 160. Dans le cas de la figure 1, le commutateur 160, en position haute, permet la lecture de la mémoire 150a.

Ces codes numériques sont convertis en un signal analogique par le convertisseur numérique 170 et ce signal est ensuite modulé par un modulateur 180 à une fréquence supérieure à la fréquence de lecture fl. Cette fréquence plus élevée est égale à celle d'une onde porteuse acoustique et elle sera désignée dans la suite de la description par fc. Un transducteur 190 transforme ce signal en onde ultrasonore.

Après cette transduction, le signal sonore est transmis à la cellule de Bragg 50 pour qu'il interfère avec des rayons lumineux émis par un ensemble 30 qui comporte une source lumineuse constituée par un laser 300 dont le faisceau est transformé par des moyens optiques connus en soi 320 en une nappe de rayons parallèles s'étendant dans un plan perpendiculaire à l'angle de Bragg à la cellule 50.

Après traversée de la cellule 50, les rayons parallèles sont focalisés comme précédemment décrit.

La compression du signal reçu et traité doit être d'autant plus importante que la vitesse de propagation de l'onde ultrasonore est élevée.

Par ailleurs, le signal reçu à la fréquence Fm est modulé à la fréquence dfh qui correspond au décalage aléatoire de la fréquence du récepteur GPS. Ce décalage a pour conséquence que le signal qui est généré à la fréquence fl est modulé par le décalage, également comprimé défini par la formule :

$$\frac{(fl)}{(fm)} \times (dfh)$$

Ce décalage en fréquence affecte la reconnaissance des codes.

Pour permettre cette reconnaissance du code reçu, et notament de la séquence à reconnaître, plusieurs conditions sont néssecaires. A cet effet, il faut que :

– Le code porté par le signal reçu W et le code porté par le code test de la séquence test X doivent pouvoir se superposer sur toute leur longueur.

– Le code test de la séquence test X doit être émis inversé dans le temps pour permettre la propagation d'une onde équivalente au signal reçu W.

– L'effet du décalage de fréquence correspondant à la formule

$$\frac{(fl)}{(fm)} \times (dfh)$$

doit être compensé.

Pour obtenir cette supperposition un calculateur 61 génère en synchronisation avec le début de la lecture du signal reçu une double lecture inversé dans le temps à une fréquence fl du code de la séquence à reconnaître. Ce code est stocké dans la mémoire 620 du calculateur. Ce code est converti en un signal numérique par un convertisseur numérique analogique 220 et il est modulé par un modulateur 230 à une fréquence f′ qui est identique à la fréquence de la porteuse acoustique. Il est enfin converti par un transducteur à ultrasons 240 placé à une seconde extremité de la cellule électro-acoustique, en un signal acoustique X qui se propage dans la cellule électro-acoustique.

La fréquence acoustique est detérminée au moyen d'essais successifs jusqu'à ce que l'on atteigne la valeur désirée qui est définie par la formule :

$$f'= (fc) + \frac{( fl ) \quad (dfh)}{(fm)}$$

De cette manière, le décalage de fréquence du signal reçu avec une démodulation ayant pour valeur dfh est compensé au niveau de la modulation à la fréquence acoustique f′ par un décalage équivalent et, de ce fait, la reconnaissance de la séquence à reconnaître est possible.

En effet, dans ce mode de réalisation de l'invention, les quatre conditions de superposition sont remplies.

La superposition du code reçu W par le code test de la séquence test correspond à un maximum de l'amplitude de la modulation du faisceau laser Y traversant la cellule de Bragg 50 et interagissant avec les deux ondes ultra sonores.

A cet effet, le faisceau laser est modulé à une fréquence définie par la formule :

$$(2\ fc) + \frac{(dfh)\ (fl)}{(fm)}$$

et l'amplitude maximum de cette modulation correspond exactement à l'instant de la reconnaissance.

Pour détecter la reconnaissance de cette superposition, on a disposé d'une part un récepteur électro-optique 410 et d'autre part une photodiode dont le signal de sortie peut être amplifié et, d'autre part, un détecteur à seuil 440. De plus on a disposé selon un montage en série entre le récepteur électro-optique et le détecteur à seuil un filtre passe bande 420 qui possède comme caractéristique une bande centrale égale à 2 fc et un extracteur d'envellope 430.

Pour permettre la détection de la séquence à reconnaître, il suffit de dépasser un seuil.

Le calculateur 610 gère la mémorisation du signal reçu ainsi que les différents essais de corrélation en fonction des séquences à reconnaître cherchées sur la mémoire 620. De plus, il gère les essais de reconnaissance qui sont réalisés pour différentes valeurs de l'écart de fréquence dfh ainsi que les différentes valeurs des pics de corrélation correspondants.

Toutes ces différentes valeurs de fréquences à savoir fh, fc, f′$_1$, f′$_2$, f′$_3$,...., fl, fm, fr et fb sont générées par un oscillateur 21.

Dans le cadre de l'application au système GPS, à chaque code reconnu le calculateur associe l instant de la reconnaissance et il en déduit le décalage dans le temps entre le signal enregistré du code reçu et le début de l'enregistrement.

On peut ainsi déterminer au moyen de cette reconnaissance datée de plusieurs codes le positionnement du récepteur.

Dans d'autres applications telles que celles des télécommunications ce procédé et le dispositif pour sa mise en oeuvre permettent la détection et le décodage de signaux codés noyés dans le bruit et inaccessibles à tout récepteur qui ne connaît pas le code ou la fréquence porteuse.

## Revendications

1. - Procédé pour la détection, la reconnaissance et l'exploitation de séquences significatives de signaux modulés sur une fréquence porteuse, mêlées à d'autres signaux, du type selon lequel on génère une séquence test correspondant à la séquence à reconnaître toutes deux de profils coordonnés, puis que l'on transforme les signaux électriques de ces séquences en signaux ultra-sonores, puis que l'on conduit la séquence test (X) et une séquence reçue (W) après transformation en signaux ultra-sonores à un unique corps cristallin (50) du genre cellule de Bragg, pour que ces deux séquences (X et W) parcourent parallèlement ledit corps cristallin unique (50) caractérisé en ce que, simultanément, on dirige un faisceau laser (Y) dans l'unique et même corps cristallin (50), mais dans une direction sensiblement perpendiculaire à la précédente, c'est-à-dire à l'angle de Bragg afin que les rayons du faisceau laser soient défléchis dans une direction par la séquence test (X) et aussi dans la même direction par la séquence reçue (W), puis que l'on analyse les rayons résultants (Z) à leur sortie de l'unique corps cristallin (50), puis que l'on extrait les rayons défléchis (Z',Z'1-Z'2) des rayons résultants (Z), puis que, pour chaque bit des séquences (W et X), l'on considère afin de les comparer, les rayons (Z) non défléchis, les rayons ($Z'_1$ et Z') défléchis une fois et les rayons ($Z'_2$) défléchis deux fois.

2. - Procédé selon la revendication 1, caractérisé en ce que l'on conduit la séquence test (X) et la séquence reçue (W) dans l'unique corps cristallin (50) dans deux sens opposés d'une même direction.

3. - Procédé selon la revendication 1, caractérisé en ce que l'on conduit la séquence test (X) et la séquence reçue (W) dans l'unique corps cristallin (50) toutes deux dans le même sens de la même direction.

4. - Procédé selon la revendication 1, caractérisé en ce que l'on démodule les rayons (Z) du faisceau laser à leur sortie de l'unique corps cristallin (50) à une fréquence double de celle du décalage constaté entre un rayon (Z) non défléchi et un rayon ($Z'_2$) défléchi une fois.

5. - Procédé selon la revendication 1, caractérisé en ce que l'on démodule l'amplitude des rayons (Z) du faisceau laser à leur sortie de l'unique corps cristallin (50) à une fréquence double de celle de la fréquence test (X) se propageant dans l'unique corps cristallin (50).

6. - Procédé selon la revendication 1, caractérisé en ce que pour distinguer un rayon (Z) non défléchi d'un rayon ($Z'_2$) défléchi deux fois, on mesure la différence de fréquence existant entre eux, du fait de l'effet Doppler-Fizeau.

7. - Procédé selon la revendication 1, caractérisé en ce que l'on analyse les rayons résultants (Z et $Z'_2$) à leurs sorties de l'unique corps cristallin (50) puis, pour chaque bit de séquence que l'on considère, et afin de réaliser l'hétérodynage optique, on asservit la fréquence du signal ultra-sonore à la fréquence de la séquence reçue en fonction de l'amplitude de la différence de fréquence résultant de l'effet Doppler Fizeau existant entre un rayon défléchi deux fois et un rayon non défléchi.

8. - Procédé selon la revendication 1, caractérisé en ce que la longueur de la séquence (W) à reconnaître en transit dans l'unique corps cristallin (50) est supérieure à celle de la séquence test (X) correspondante.

9. - Procédé selon la revendication 8, caractérisé en ce que la séquence à reconnaître (W) la plus longue est au plus égale à la longueur de l'unique corps cristallin.

10. - Procédé selon la revendication 8, caractérisé en ce que la séquence (X ou W) la plus courte est inférieure à la moitié de celle de l'unique corps cristallin (50).

11. - Procédé selon la revendication 10, caractérisé en ce que l'on effectue une compression des séquences (X ou W) pour qu'au moins une des séquences complètes puisse être toute entière dans l'unique corps cristallin (50).

12. - Procédé selon la revendication 1, caractérisé en ce que l'on échantillonne et l'on mémorise le signal à une fréquence donnée, puis on relit ledit signal à une fréquence supérieure à la fréquence donnée.

13. - Procédé selon la revendication 1, caractérisé en ce que l'on émet un faisceau laser de section quelconque puis que l'on transforme optiquement ce faisceau pour qu'il s'étende, dans l'unique corps cristallin (50), en une nappe située dans un plan perpendiculaire à la direction des séquences.

**14.** - Procédé selon la revendication 1, caractérisé en ce qu'on lit les informations stockées dans chaque mémoire numérique selon une fréquence de lecture (Fl) supérieure à la fréquence d'écriture (Fe) afin d'adapter la durée de la séquence lue et à traiter (W) aux caractéristiques de propagation propres à l'unique corps cristallin (50) puis que l'on adapte à cette même durée la séquence test (X) générée.

**15.** - Procédé selon la revendication 1, caractérisé en ce que l'on démodule et que l'on intègre le signal reçu sur des périodes de durée au moins égale à une fraction de celle d'un bit élémentaire de la séquence à reconnaître, que l'on convertit en signaux numériques le résultat de cette intégration et que l'on stocke dans au moins une mémoire numérique ces signaux numériques à la fréquence d'émission de la séquence à reconnaître.

**16.** - Procédé selon la revendication 15, caractérisé en ce que l'on démodule et que l'on intègre le signal reçu sur une période de durée égale à celle d'un bit élémentaire de la séquence à reconnaître.

**17.** - Procédé selon la revendication 15, caractérisé en ce que l'on stocke dans au moins une mémoire numérique un nombre de valeurs du résultat de l'intégration qui correspond à un échantillonnage successif du signal reçu au moins égal à deux fois le nombre de bits élémentaires de la séquence à reconnaître.

**18.** - Procédé selon la revendication 15, caractérisé en ce que l'on mémorise deux séries de valeurs à la fréquence de la séquence à reconnaître, l'un des séries correspondant à la valeur du résultat de l'intégration sur une durée coïncidant avec celle de la première moitié de la période d'intégration et l'autre des séries correspondant à la valeur du résultat de l'intégration sur une période coïncidant avec celle de la seconde moitié de la période d'intégration.

**19.** - Dispositif pour la détection, la reconnaissance et l'exploitation de séquences significatives de signaux modulés sur une fréquence porteuse, mêlées à d'autres signaux, du type comportant un générateur d'une séquence test correspondant à la séquence à reconnaître toutes deux de profils coordonnés, un transducteur des signaux électriques de ces séquences en signaux ultra-sonores, un corps cristallin du genre cellule de Bragg muni de connexions pour une séquence test (X) et pour une séquence reçue (W) caractérisé en ce qu'il comprend un récepteur-démodulateur (11-13) de séquences de signaux à reconnaître, un générateur (21-22) de séquences de signaux test (X), un unique corps cristallin (50) du genre cellule de Bragg auquel sont reliés respectivement le récepteur-démodulateur (11-13) et le générateur (21-22), un projecteur (31) de faisceau laser et un récepteur (43) des rayons (Z) issus de ce faisceau placés tous deux en regard de deux faces opposées (53 et 54) du corps cristallin (50), ce récepteur (43) de rayons (Z) étant associé à un détecteur (44) susceptible de différencier les rayons (Z) non défléchis, les rayons (Z' et Z'$_1$) défléchis une fois et les rayons (Z'$_2$) défléchis deux fois.

**20.** - Dispositif selon la revendication 19, caractérisé en ce que le récepteur (43) de rayons (Z) est associé à un démodulateur (44) réglé pour démoduler des signaux électriques ayant une fréquence différente de deux fois celle du signal ultra-sonore (W-X) se propageant dans l'unique corps cristallin (50).

**21.** - Dispositif selon la revendication 19, caractérisé en ce que le démodulateur (44) associé au récepteur (43) de rayons (Z) comporte un fréquencemètre de sensibilité adaptée à la perception des différences possibles entre la fréquence des rayons (Z) directs et la fréquence des rayons défléchis, ce fréquencemètre étant relié à un calculateur (60).

**22.** - Dispositif selon la revendication 19, caractérisé en ce qu'il comprend d'une part un commutateur (14) qui autorise l'accès alternatif à l'une des deux mémoires (15a - 15b) où sont stockées les valeurs de la séquence à reconnaître et, d'autre part, un commutateur (16) qui autorise l'accès alternatif à la mémoire (62) où sont stockées les valeurs de la séquence test.

**23.** - Dispositif selon la revendication 19, caractérisé en ce qu'il comprend des moyens d'acquisition des séquences à reconnaître, qui comprennent en combinaison un intégrateur (12), un convertisseur analogique-numérique (13) et au moins deux mémoires (15a et 15b) devant contenir les valeurs numériques des séquences à reconnaître, des moyens de transcription des valeurs des séquences à reconnaître mémorisées qui comprennent en combinaison un convertisseur numérique-analogique (17) et un modulateur (18) et en ce qu'il comprend au moins une mémoire (62) devant contenir les valeurs des séquences test.

**24.** - Dispositif selon la revendication 23 <u>caractérisé en ce qu'il</u> comprend un filtre (430) du type filtre passe-bande et un détecteur d'enveloppe (420) qui sont disposés entre le récepteur (410) et le détecteur à seuil (440).

**25.** - Dispositif selon la revendication 23, <u>caractérisé en ce qu'il</u> comprend des moyens (610) pour gérer la synchronisation des reconnaissances successives des séquences à reconnaître et déterminer des pics de corrélation ainsi qu'au moins un détecteur de seuil (420).

FIG.1

FIG.2

FIG.3

FIG.4

FIG.5

# FIG.6

# FIG.7

Office européen
des brevets

**RAPPORT DE RECHERCHE EUROPEENNE**

Numero de la demande

EP 90 40 3745

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | WESTINGHOUSE ENGINEER, vol. 33, no. 3, mai 1973, pages 76-82; M. GOTTLIEB: "Opto-acoustic signal processors extend radar and communication system capabilities" <br> * Page 81, paragraphe: "A prototype opto-acoustic correlation receiver" * <br> --- | 1 | G 06 E 3/00 <br> G 06 E 1/02 |
| X | IEEE TRANSACTIONS ON SONICS AND ULTRASONICS, vol. SU-32, no. 5, septembre 1985, pages 745-759; A. CHATTERJEE et al.: "The use of SAW convolvers in spread-spectrum and other signal-processing applications" <br> * Page 749, colonne 1, ligne 28 - colonne 2, ligne 34; page 753, colonne 1, ligne 12 - page 754, colonne 1, ligne 7; pages 756-757, appendix; figures 12-14,24 * <br> --- | 1-7,10, 13,19, 20 | |
| A | IDEM | 8,9,11, 12,14- 18,21- 25 | **DOMAINES TECHNIQUES RECHERCHES (Int. Cl.5)** <br> G 06 E |
| X | US-A-4 326 778 (BERG et al.) <br> * Résumé * <br> --- | 1 | |
| A | GB-A-2 040 036 (EMI) <br> * Page 2, lignes 12-16; page 4, lignes 27-29; figure 2 * <br> --- | 1 | |
| E | FR-A-2 639 440 (HUIGNARD et al.) <br> * Revendication 1 * <br> ----- | 1 | |

Le présent rapport a été établi pour toutes les revendications

| Lieu de la recherche | Date d'achèvement de la recherche | Examinateur |
|---|---|---|
| LA HAYE | 28-03-1991 | COHEN B. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0407)